# EUROPEAN PATENT APPLICATION

(11) **EP 0 879 940 A1**
(43) Date of publication of application: **25.11.1998**
(21) Application number: 97830240.4
(22) Date of filing: 23.05.1997
(51) Int. Cl.: F01N 3/04

(54) **Method and device for purification of exhaust gases**

(71) Applicant: Pagani, Achille, 20020 Lazzate (Milano) (IT)
(72) Inventor: Pagani, Achille, 20020 Lazzate (Milano) (IT)
(74) Representative: Checcacci, Giorgio

(57) **Abstract**

The device (1) comprises a tight-closed vessel (2) including a tank (3) which occupies all the lower part of the vessel (2), an inlet chamber (4), an outlet chamber (5) and an auxiliary chamber (6). A first baffle (7) separates the outlet chamber (5) from the inlet chamber (4) and a second baffle (8) separates the inlet chamber (4) from the auxiliary chamber (6). The tank (3) is filled with a water mass sufficient to reach the minimum level. Special additives such as an antifreeze may be added to the water, according to the specific use. In use combustion gases reach the inlet chamber (4) through an intake pipe (9) and enter the underlying water mass, which is stirred by a whirling and turbulent motion by the pressure of gases, a purification course and a return course between the inlet chamber (4) and the outlet chamber (5) being obtained by means of auxiliary baffles (19). The purified gases come out of the water mass and enter the outlet chamber (5) by passing through filtering layers (20). The gases leave the vessel (2) through mouths (13) of an exhaust manifold (12). Further possible suspended water is held back by outlet filters (15) and/or recovered from a water separator (16), before leaving the device (1). An inlet net-filter (11) prevents water droplets from accidentally reflowing into the intake pipe (9). Non-return valves (10,14) are provided to prevent the reflow of water or gases from the exhaust manifold (12) into the vessel (2) and therefrom into the intake pipe (9) caused by possible counter pressure in the exhaust manifold (12).

## Description

The present invention relates to the purification of exhaust gases of combustion processes, in particular but not exclusively, processes of combustion of heavy hydrocarbons, fossil and vegetable fuels.

The need of reducing as much as possible the presence of pollutants in exhaust gases from combustion processes, before their release in the air, is well known. Well known are also numerous methods and devices for the more or less effective purification of gases.

In particular, in the field of motor-cars, it is known that a diesel cycle gas oil engine is inherently cleaner than an Otto cycle gasoline engine. However, also a gas oil engine is all the same polluting, and besides its type of pollution - even though less hazardous for health than the pollution of a gasoline engine - often turns out to be more disagreeable because of its peculiar smell.

Object of this invention is to provide a device for the purification of gases from the combustion of heavy hydrocarbons, which is particularly simple and economical, and therefore suitable for large scale use also in applications where cost and overall dimensions play a determinant role, such as for instance in diesel motor-vehicles.

Therefore, in a first aspect, this invention relates to a method for the purification of combustion exhaust gases, characterised in that gases are caused to pass through a water mass.

Passing through water causes the pollutants present in gases, in particular heavier substances, to be partly held back by water.

Generally, this method may be advantageously used for the treatment of gases of any type. However, it has proved to be particularly effective and therefore preferable, for gases from the combustion of heavy hydrocarbons (such as diesel oil, naphtha, fuel oil), fossil and vegetable fuels (coal, wood). In fact, gases from the combustion of these substances contain a high quantity of heavy pollutants, which are very effectively held back by water.

A particularly advantageous application seems to be in motor-vehicles driven by diesel cycle engines, both because of the effectiveness of purification and the simplicity and economy of the application.

Preferably, the water mass is undergoing a turbulent motion. Such condition may be obtained either by means of pumps, turbines or the like, or by directly exploiting the pressure of exhaust gases. This is the case, for instance, of exhaust gases from diesel engines.

In a second aspect, the invention relates to a device for the purification of combustion exhaust gases, comprising a tight-vessel, an inlet chamber, an outlet chamber, an intake manifold open onto the inlet chamber, an exhaust manifold open onto the outlet chamber, characterised in that it comprises a purification course between the inlet chamber and the outlet chamber, said purification course being obstructed in use by a water mass.

Such a device allows to implement the method of the invention. Gas purification takes place along the purification course, thanks to the action of water which gases must pass through to exhaust.

Advantageously, the device also comprises between the inlet chamber and the outlet chamber a return course, such return course being obstructed during the running by the same water mass that obstructs the purification course. This allows for a water circulation between the purification and the return courses, facilitating the onset of a turbulent motion in the water mass.

Advantageously, the vessel comprises a lower tank for water, wherein the purification and the return courses are obtained by means of baffles, and wherein the inlet chamber and the outlet chamber are obtained higher up relatively to the tank, and are open downwards toward said tank at a height lower than the minimum level considered for the water in the tank. This structure results to be extremely compact, and therefore of easy installation.

Preferably, the purification course follows a labyrinth-like path, obtained by means of baffles located in the tank. The overall dimensions being the same, this device extends the purification course and facilitates the onset of a turbulent motion in the water mass.

Preferably, to prevent backflowing due to counter-pressures in gas exhaust ducts, the intake manifold and/or the exhaust manifold are protected by a nonreturn valve, for instance a clack valve.

Preferably, there are provided means to prevent droplets sprayed by water turbulent motion from entering gas ducts. For instance, such means may comprise a mechanical net-filter on the intake manifold and/or the exhaust manifold.

Always to hold back water and to prevent it from entering the gas exhaust ducts, the device preferably comprises a filtering layer between the lower tank and the outlet chamber, and possibly also a water separator in the exhaust manifold. To facilitate maintenance, the filtering layer is housed in an extractable drawer, tightly-mounted in the vessel.

Further characteristics and advantages of the invention will appear more clearly from the following description, wherein reference is made to the attached drawings, wherein:

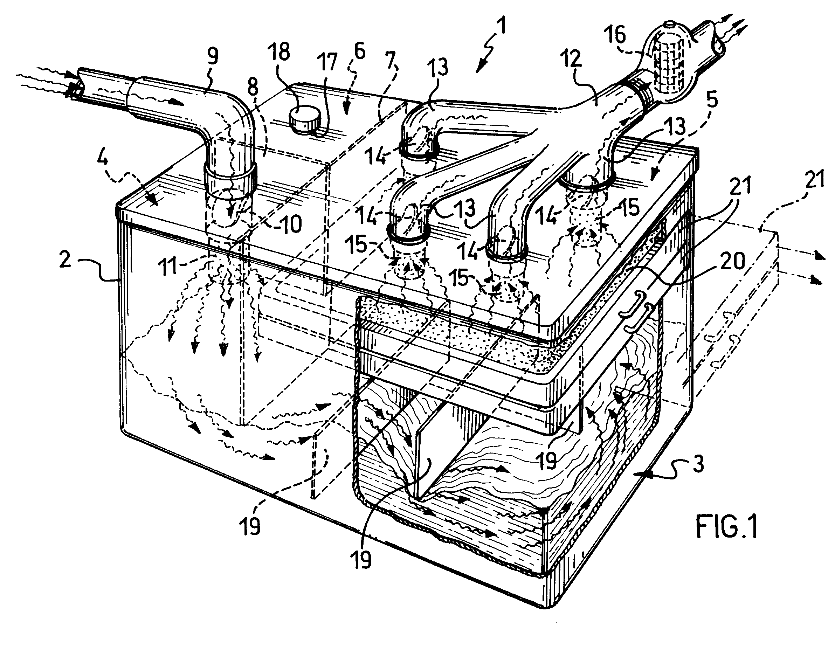

- Figure 1 is a perspective view, in transparency and partly sectioned, of a device according to the invention;

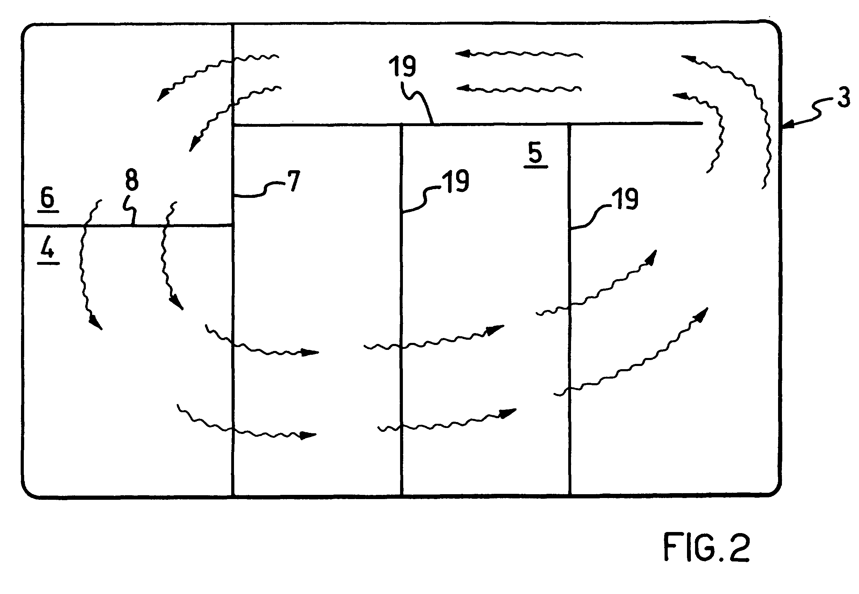

- Figure 2 is a diagram showing in plan the purification course and the return course of the device of Figure 1.

In the figures, 1 indicates the purification device as a whole, which device comprises a tight-closed vessel 2. Vessel 2 has an essentially parallelepiped shape, but it can obviously have any other suitable form.

In vessel 2 a tank 3 is included which occupies all the lower part of vessel 2. Tank 3 is open upwards and is intended to be filled with water when running.

Above tank 3, in vessel 2, three chambers are defined, adjoining one another, all of them open downwards towards tank 3: an inlet chamber 4, an outlet chamber 5 and an auxiliary chamber 6. Chambers 4, 5, 6 are separated from one another by vertical baffles 7 and 8; baffle 7 separates the outlet chamber 5 from the inlet 4 and auxiliary 6 chambers, baffle 8 separates the inlet chamber from the auxiliary chamber.

Baffles 7 and 8 are sealed with respect to one another and the vessel inner walls, but interrupted in the lower part at a height lower than the minimum level foreseen for the water in tank 3. In this way, chambers 4, 5, 6 are in communication with one another only through the water present in tank 3.

On inlet chamber 4, an intake manifold 9 is open, provided with a nonreturn valve 10 of the clack type, and a mechanical net-filter 11.

On outlet chamber 5, an exhaust manifold 5 is open, which in the case shown comprises four mouths 13, distributed across the upper face of chamber 5. Each of mouths 13 is provided with a nonreturn valve 13 of the clack type and a mechanical net-filter. Besides, manifold 12 is also provided with a water separator 16. Valves 10, 14, filters 11,15 and the separator 16 are components known in themselves, and therefore they will not be described in detail.

On the auxiliary chamber 6, an opening 17 is provided for water filling up, provided with a closing stopper 18.

In tank 4, baffles 19 are so arranged as to define a labyrinth-like purification course and a return course between the inlet chamber 4 and the outlet chamber 5.

In vessel 2, between the outlet chamber 5 and tank 3, one or several filtering layers 20 are optionally provided, mounted each on respective extractable tight-mounted drawers 21.

The device 1 works as follows.

Tank 3 must be filled with a water mass sufficient to reach the minimum level. Special additives may be added to water, according to the specific use, for instance in case of use in cold regions, an antifreeze will be necessary.

Combustion gases are fed to intake manifold 9 wherefrom they reach the inlet chamber 4. In such chamber 4, gases can exhaust only by passing through water. Thanks to the pressure of gases (spontaneous in case of internal combustion engines, or forced in case of different combustion types), gases enter the underlying water mass, pushing it in the purification course formed in tank 3 by baffles 19.

Pushed by the pressure of inlet gases, water is stirred by a whirling and turbulent motion. Passing through water, gases are purified from many pollutants that are present at the inlet, especially heavy substances that are held back by water.

In outlet chamber 5, purified gases can come out of the water mass and rise therefore towards mouths 13 of exhaust manifold 12. In rising, purified gases pass through the possible filtering layers 20, unloading during their passing any suspended droplets. Further possible suspended water is held back by filters 15 and/or recovered from separator 16, before coming out from device 1. In the same way, filter 1 prevents water droplets from accidentally reflow into the intake manifold 9.

Nonreturn valves 10 and 14 prevent possible counter-pressures from causing water or gases from exhaust manifold 13 from reflowing into vessel 2 and therefrom into intake manifold 9.

The device 1 proved extremely effective in reducing heavy pollutants, which are effectively held back by water. In particular, a device with about 30 l water, applied to a 2500 cm³ boosted diesel engine has allowed to reduce pollutants by over 80%, measured according to EC test 72/306.

## Claims

1. A method for the purification of combustion exhaust gases, characterised by causing gases to pass through a water mass.

2. The method according to claim 1, wherein gases are gases due to the combustion of heavy hydrocarbons.

3. The method according to claim 2, wherein gases are exhaust gases of an internal combustion diesel cycle gas oil engine.

4. The method according to claim 1, wherein the water mass is subject to a turbulent motion.

5. The method according to claim 4, wherein the turbulent motion of the water flow is caused by the pressure of exhaust gases.

6. A device for the purification of combustion exhaust gases, comprising a tight-vessel, an inlet chamber, an outlet chamber, an intake manifold open on to the inlet chamber, an exhaust manifold open onto the outlet chamber, characterised in that it comprises a purification course between the inlet chamber and the outlet chamber, such purification course being obstructed in use by a water mass.

7. The device according to claim 6, comprising also between the inlet chamber and the outlet chamber a return course, such return course being obstructed during the running by the same water mass that obstructs the purification course.

8. The device according to claim 7, wherein the vessel comprises a lower water tank, wherein the purification course and the return course are obtained by means of baffles, and wherein the inlet chamber and the outlet chamber are obtained above the tank and are open downwards towards the same tank, at a height lower than the minimum level foreseen for the water in the tank.

9. The device according to claim 6, wherein the purification follows a labyrinth-like path.

10. The device according to claim 6, wherein the intake manifold and/or the exhaust manifold are protected by a nonreturn valve.

11. The device according to claim 10, wherein the nonreturn valve is a clack valve.

12. The device according to claim 6, wherein the intake manifold and/or the exhaust manifold are protected by a net-filter.

13. The device according to claim 8, comprising a filtering layer between the lower tank and the outlet chamber.

14. The device according to claim 13, wherein the filtering layer is housed in an extractable drawing, tight-mounted in the vessel.

15. The device according to claim 6, comprising a water separator in the exhaust manifold.
